# FASCICULE DE BREVET EUROPEEN

(11) **EP 2 347 210 B1**
(45) Date de publication et mention de la délivrance du brevet: **07.11.2018**
(21) Numéro de dépôt: 09756296.1
(22) Date de dépôt: 16.11.2009
(51) Int. Cl.: F28F 13/06, F28F 13/12, A47J 31/54

(54) **CONDUIT DE CIRCULATION D'UN FLUIDE**
ROHR ZUR ZIRKULATION EINES MEDIUMS
FLUID CIRCULATION DUCT

(30) Priorité: 18.11.2008 FR 0857824
(43) Date de publication de la demande: 27.07.2011
(73) Titulaire: Compagnie Méditerranéenne des Cafés, 06510 Carros (FR)
(72) Inventeur: BLANC, Jean-Pierre, F-06000 Nice (FR); GOERING, Alain, F-06000 Nice (FR)
(74) Mandataire: Decobert, Jean-Pascal
(86) Numéro de dépôt international: PCT/EP2009/065211
(87) Numéro de publication internationale: WO 2010/057844

(56) Documents cités:
- DE-A1-102007 011 635
- DE-U1- 9 418 641
- DE-U1-202007 005 738
- ES-A1- 2 259 265
- US-A- 3 769 959
- US-B1- 6 816 670

## Description

La présente invention concerne une machine de préparation de boissons par infusion conforme au préambule de la revendication 1. Une application préférée est la réalisation de machines à café de type espresso.

Dans ce dernier domaine indicatif, le fluide, en l'occurrence de l'eau, doit être chauffée à des niveaux assurant une extraction optimale des substances aromatiques du café moulu. Des dispositifs appelés chaudières sont prévus à cet effet et disposent communément d'un circuit de transit de l'eau à chauffer et des moyens de chauffage notamment sous forme de résistance électrique. L'eau peut par exemple passer d'une température d'entrée de 20° Celsius à une température de sortie comprise entre 70 et 100° Celsius.
L'eau peut par exemple passer d'une température d'entrée de 20° Celsius à une température de sortie comprise entre 70 et 100° Celsius.

On connait de la publication brevet US 6 816 670 B1 un système d'échange de chaleur pour chauffer l'eau dans une machine à café. Une chaudière y est dotée d'un circuit d'eau et d'une résistance électrique servant de moyens de chauffage.

Un des inconvénients des chaudières traditionnelles est le temps nécessaire à la montée en température de l'eau transitant dans le circuit. En effet, l'inertie des chaudières classiques consomme une grande quantité d'électricité ce qui est d'autant plus pénalisant pour des appareils électroménagers que l'on met en marche et que l'on désactive de façon répétée. Cela arrive particulièrement dans le domaine des machines à café où les utilisateurs éteignent et rallument les machines plusieurs fois dans la journée. Outre les problèmes de consommation énergétique, les chaudières traditionnelles, lentes à s'échauffer, induisent un temps d'attente pouvant gêner le consommateur.

Des chaudières plus perfectionnées ont récemment été proposées avec des moyens d'échauffement plus rapides de sorte qu'une montée en température est produite généralement en moins de 10 secondes. En particulier, des techniques utilisant des résistances sérigraphiées assurent une réponse quasi immédiate des moyens de chauffage de la chaudière. Cependant, on a constaté des limitations techniques notamment quant aux températures de consigne que l'on peut obtenir.

Il existe donc un besoin d'améliorer la capacité d'échauffement d'un fluide circulant dans un conduit de sorte à obtenir un rapport temps de chauffage / température de sortie optimum.

La présente invention s'inscrit dans ce cadre et propose à cet effet un conduit amélioré de circulation d'un fluide qui comporte des moyens de mise en turbulence du fluide circulant dans son volume intérieur.

En effet, les chaudières les plus récentes montrent des limitations dans la mesure où l'écoulement du fluide est relativement rapide ce qui, en combinaison avec des moyens de chauffage violents, induit la formation d'une pluralité de couches dans l'écoulement du fluide de sorte que le gradient température entre la partie du fluide à proximité de la zone de chauffage et la partie du fluide la plus éloignée est fort élevé.

Pour contrer cette tendance, l'invention assure une mise en turbulence au moins en certaines parties du conduit du fluide en circulation. S'opère alors un

Dans le cas des dispositifs du type chaudière pour machine de préparation de boissons par infusion, les conduits de circulation du fluide (généralement de l'eau) ont une faible section et imaginer qu'une mise en turbulence, à cette échelle puisse avoir un intérêt n'est pas évident puisque les problèmes d'écoulement laminaire seraient généralement considérés comme inapplicables à ces dimensions.

Le demandeur a constaté avec surprise que cette invention offrait la possibilité d'atteindre des températures de consigne nettement plus élevées.

D'autres but et avantages apparaîtront au cours de la description qui suit qui présente divers modes de réalisation de l'invention à titre non limitatifs.

Avant cette description détaillée, il est rappelé que l'invention concerne une machine de préparation de boissons par infusion selon la revendication 1.

Suivant des variantes préférées mais non limitatives, ces machines sont définies par les caractéristiques additionnelles des revendications dépendantes 2 à 20.

Les dessins ci-joints sont donnés à titre d'exemples et ne sont pas limitatifs de l'invention. Ils représentent seulement un mode de réalisation de l'invention et permettront de la comprendre aisément.
La figure 1 présente schématiquement l'écoulement d'un fluide dans un conduit traditionnel.
La figure 2 schématise le saut technologique opéré par la mise en oeuvre de l'invention en terme de niveau de température obtenu dans une application à une chaudière de machine à café espresso.
Les figures 3 et 4 montrent une première possibilité de réalisation de l'invention.
Les figures 5 et 6 illustrent une autre variante de l'invention et la figure 7 en montre une légère modification.
Les figures 8 et 9 présentent un autre mode de réalisation.
Les figures 10 à 12 montrent une autre variante avec un conduit de section variant selon sa longueur.
Les figures 13 et 14 présentent une autre possibilité.
La figure 15 est une vue en coupe d'une chaudière comprenant une paire de conduits selon l'invention.
La figure 16 montre, en coupe longitudinale, une autre possibilité de formation du conduit et la figure 17 présente une vue du dessus de la partie en creux du conduit.
La figure 18 illustre en perspective en perspective une partie de chaudière incorporant un conduit.

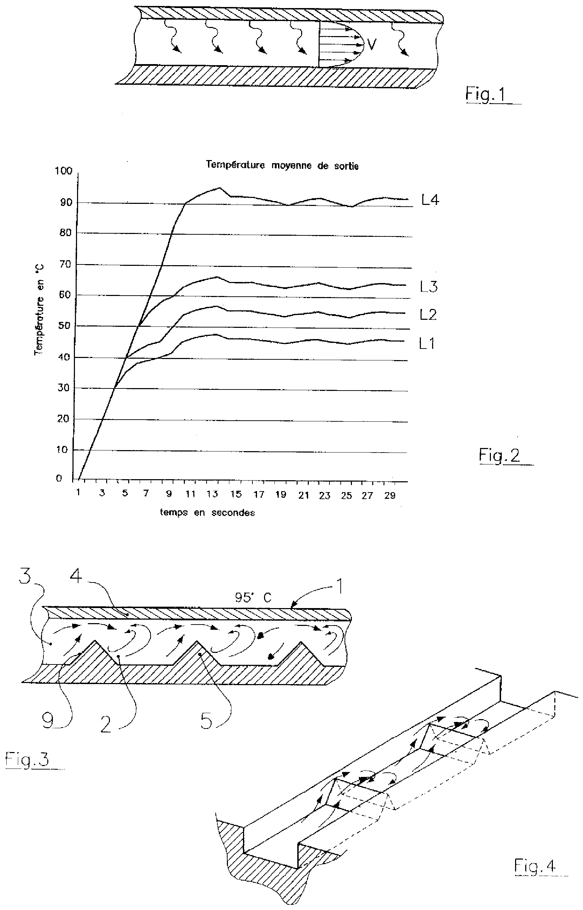

En référence à la figure 1, on a présenté un conduit traditionnel avec des parois délimitant un volume intérieur dans lequel le fluide, notamment de l'eau, circule durant une phase d'échauffement. L'échauffement est produit par transfert d'énergie calorifique par l'intermédiaire d'une des parois du conduit. Dans le cas représenté, c'est la paroi supérieure qui a cette fonction et l'échange de chaleur est schématisé par des flèches légèrement courbées.

Cette figure schématise également le type d'écoulement du flux actuellement constaté avec un gradient de vitesse suivant la hauteur du conduit depuis les couches limites (celles situées au niveau du contact avec les bords du conduit) vers le centre du conduit où la vitesse est maximale. Le demandeur a constaté avec surprise que, malgré la rapidité de l'écoulement et les effets convectifs auxquels on peut s'attendre du fait de réchauffement violent, une stratification du fluide se produit. En particulier, une différence de température de l'ordre de 40° Celsius est relevée entre les strates de fluide à proximité de la zone de chauffage et les strates les plus éloignées. En conséquence, la température moyenne du fluide échauffé subit de graves limitations.

La figure 2 illustre sous forme de courbes temps / température les échauffements de fluide constatés d'une part avec des conduits de configuration traditionnelle (il s'agit des courbes L1, L2, L3) et d'autre part avec l'invention (il s'agit de la courbe L4). On note très clairement que les conduits classiques atteignent leur limitation technique avant 65° Celsius alors que l'invention a permis d'obtenir des températures moyennes de 95° Celsius. Ces constats ont été faits en prenant la température de l'eau circulant dans une chaudière de machine à café espresso à pression de 16 bars, la sonde de température étant située au milieu de la hauteur d'un conduit de section rectangulaire.

En outre, les courbes ont été obtenues avec des conduits de même section (6 mm²) et de même longueur (750 millimètres). La courbe L1 correspond à un conduit de section rectangulaire S1 ayant la hauteur la plus importante et la largeur la plus petite. A l'inverse la courbe L3 correspond à un conduit de section rectangulaire S3 ayant la plus faible hauteur et la plus grande largeur. La courbe L2 est relative à un cas intermédiaire en rapport largeur / hauteur. La courbe L4 correspond à un conduit de section du type général de L3 (section S3) mais avec des moyens de mise en turbulence du flux. Même si la réduction de la hauteur du conduit améliore la température de sortie comme cela ressort des courbes L1, L2 et L3, on atteint une limitation aux environs de 65° C. On constate très clairement par le saut de température entre L3 et L4 que les turbulences induites par l'invention provoquent une rupture de la stratification et entraînent une meilleure captation de l'énergie calorifique par le fluide.

Dans le cadre de l'invention, le terme conduit s'entend d'une portion d'un circuit de fluide. Le conduit peut constituer l'ensemble du circuit fluidique ou seulement une ou plusieurs partie de celui-ci. Par exemple, il peut être situé dans la zone d'échauffement maximal du fluide et ne pas être présent dans les zones d'entrée et de sortie du fluide dans le circuit. Différents conduits selon l'invention peuvent être également répartis le long du circuit. Ces diverses possibilités et d'autres variantes entrent dans le cadre de l'invention.

Par ailleurs, ni la forme intérieure, ni la forme extérieure et le mode de construction du conduit ne sont limitatifs de l'invention. Parmi les possibilités envisageables, on peut indiquer les options suivantes :
- conduit de section intérieure rectangulaire ou circulaire
- conduit formé par assemblage de pièces par exemple avec :
- une pièce de base avec un tracé du conduit en creux et une pièce de couverture telle une plaque par laquelle par exemple peut s'opérer l'échange thermique notamment aux moyens d'une résistance sérigraphiée située sur la face de la couverture opposée au conduit.
- plus de deux pièces, chacune constituant une paroi du conduit. Par exemple quatre pièces peuvent former les quatre bordures d'un conduit rectangulaire.
- un conduit de forme globale assurant une circulation rectiligne du fluide, ou en serpentin avec des virages, en hélice ou encore en spirale.

Ces exemples ne sont pas limitatifs de l'invention.

Pour obtenir des résultats d'échauffement aussi satisfaisants, l'invention réalise une mise en turbulence du flux. L'objectif est de rompre la stratification que le demandeur a constatée sur les dispositifs existants.

Pour l'ensemble de la description, l'expression "surface en relief" s'entend au sens large comme toute variation de forme sur les parois internes du conduit 1 apte à créer une discontinuité géométrique.

Un mode de réalisation préféré consiste à réaliser des moyens de mise en turbulence avec des surfaces en relief sur la paroi interne du conduit.

Une première solution est présentée aux figures 3 et 4 au niveau desquelles le conduit comporte une partie d'échange thermique 4 par exemple sous la forme d'une plaque dotée d'une résistance sérigraphié sur sa face externe, un flux 3 circulant dans le volume intérieur 2 du conduit 1. Suivant cette possibilité, les moyens de turbulence sont des surfaces en relief et plus particulièrement des surfaces en saillie vers l'intérieur du volume 2. Il s'agit ici d'éléments de section triangulaire (cette forme n'est pas limitative) aptes à former des pans inclinés 9 configurés pour dévier le flux 3. La déviation obtenue est illustrée par les flèches en figure 3. La mise en turbulence est schématisée par la forme des flèches. Une possibilité avantageuse est de former les pans 9 de sorte que le flux 3 est dévié en direction de la partie d'échange thermique 4. Cette configuration peut accentuer la rupture de stratification du flux 3 en particulier au niveau de la couche limite. Les pans inclinés peuvent présenter une inclinaison comprise entre 20 et 60° bien que cette disposition soit purement indicative.

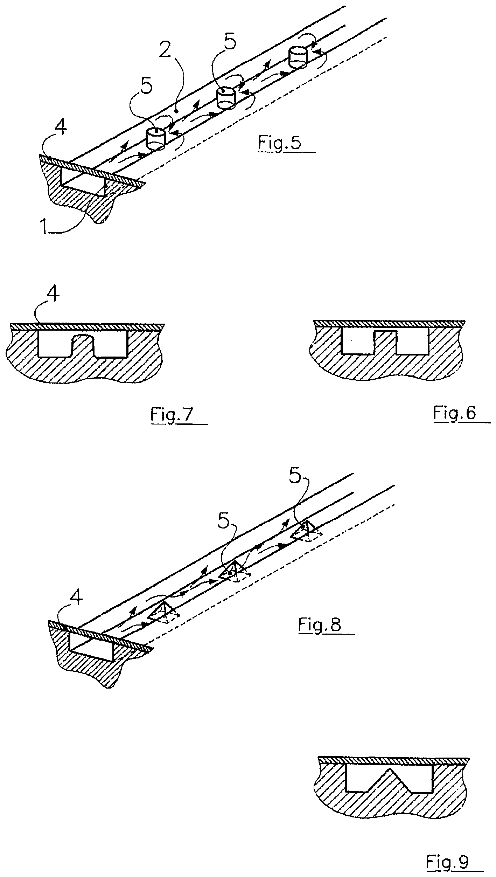

Une autre possibilité de surface en saillie 5 est illustrée aux figures 5 et 6 sous forme de plots s'étendant vers le volume intérieur 2 du conduit depuis une paroi de celui-ci opposé à la partie d'échange thermique 4. Là encore, les plots assurent une mise en turbulence apte à casser la stratification du flux. Dans le cas représenté, les plots sont cylindriques mais des variantes de forme sont possibles telles que celle illustrée en figure 7 sous forme de bossage semi conique. On peut prévoir que les plots s'étendent sur au moins la moitié de la hauteur du conduit.

Les figures 8 à 9 montrent une variante avec des surfaces en saillie 5 de forme pyramidale.

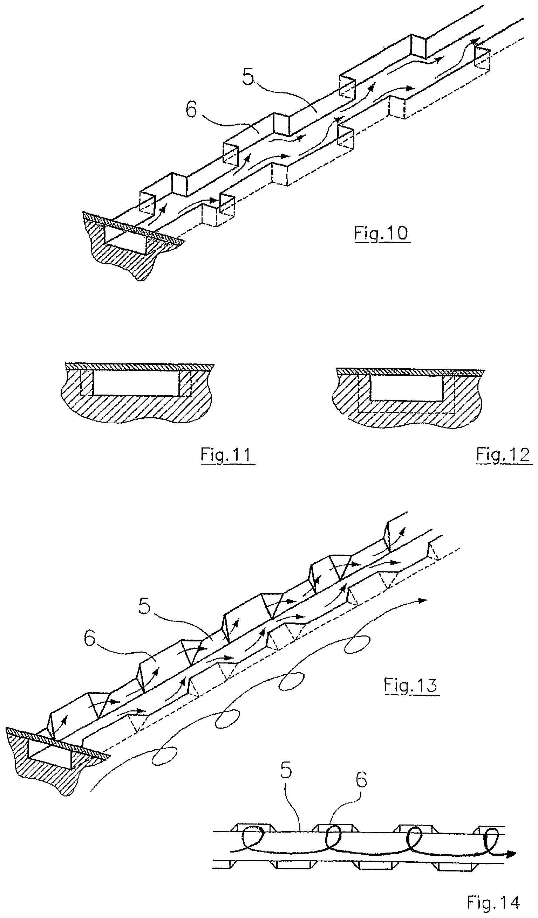

Dans d'autres cas, les surfaces en creux 6 sont formées sur au moins une partie des parois du conduit 1 et un exemple en est présenté en figure 10. A cette figure, on alterne les parties en creux 6 et les surfaces en saillie 5 de sorte à produire de brusques élargissements de la section du conduit 1. La figure 11 montre une zone de la longueur où la section est maximale et la figure 12 montre une zone de la longueur où la section est rétrécie. Avantageusement, le changement de section s'effectue avec une discontinuité de sorte que l'élargissement ou le rétrécissement est brusque afin de favoriser la turbulence. On peut notamment prévoir des angles droits au niveau des changements de section.

Les figures 13 et 14 montrent une variante du cas précédent avec des élargissements de forme conique alternés et des pans inclinés de transition entre les sections larges et les sections rétrécies. Cette configuration favorise un cheminement hélicoïdal du flux à l'intérieur du conduit.

A noter que le changement de section est ici représenté avec des conduits de section sensiblement rectangulaires mais ce cas n'est pas limitatif. Par ailleurs, le changement de section peut intervenir en largeur, en hauteur (encore appelée plus loin profondeur) ou en combinaison des deux. Le changement de section comprend également une succession de sections de formes différentes.

Suivant une possibilité, on cherche à préserver une certaine continuité dimensionnelle pour la section du conduit. Cela est utile pour éviter des zones d'étranglement ou des variations trop importantes de pression le long du conduit. Avantageusement, il y a conservation de taille de section dans les zones équipées des moyens de turbulence. Cette conservation signifie que les variations de forme n'engendrent pas de variation de dimension de section ou que la variation de section est globalement comprise entre -20% et +20% autour d'une valeur médiane.

S'agissant de dispositifs de chauffage du type chaudières pour l'électroménager, telle une chaudière pour machine de préparation de boissons par infusion, une section de conduit comprise entre 3 mm² et 10 mm² est avantageuse. Préférentiellement, la section est de l'ordre de 4 à 6 mm², particulièrement de 4,5 mm². Ces dernières valeurs sont des sélections de dimension pour lesquelles on observe une montée optimale de la température du fluide à chauffer, généralement de l'eau.

Les dimensions sus-mentionnées sont en accord avec le débit d'eau traversant la chaudière d'une machine à café expresso. Le volume d'eau cheminant dans le canal ainsi défini correspond au volume de boisson infusé contenu dans une tasse, soit entre 10 ml et 150ml. Le temps de réalisation de ce volume de boisson n'excède pas la minute. Le débit s'établit entre 100 et 200 ml par minute et plus particulièrement de l'ordre de150 ml/minute.

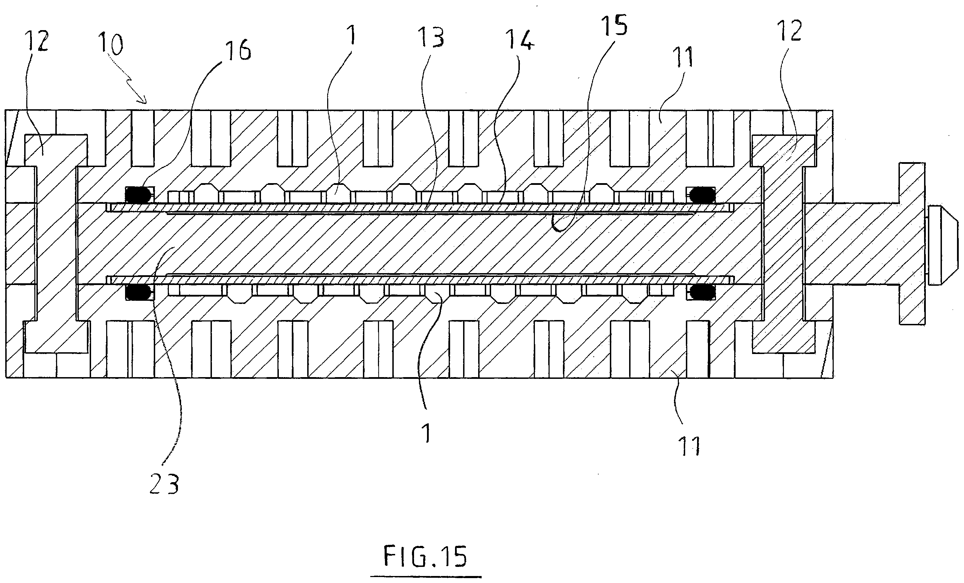

En référence aux figures 15 à 18, une configuration de conduit apparaît dans son contexte du dispositif de chauffage.

Plus précisément, la figure 15 montre un dispositif du type chaudière pourvu d'un corps muni de deux flasques 11 réunis par des moyens d'assemblage 12 et délimitant un volume intermédiaire. Dans ce volume, une partie centrale 23 aplatie est intercalée et les flasques 11 se plaquent de part et d'autre de cette pièce.

La partie centrale 23 comporte, dans le cas représenté et non limitativement, un renfoncement sur chaque face pour l'intégration d'une plaque 13. La face externe 15 de chaque plaque 13 est orientée vers la face de la partie centrale 23. La face interne 14 de chaque plaque est orientée à l'opposé. C'est à ce niveau qu'est réalisée la partie d'échange thermique 4 précédemment décrite.

Une réalisation préférée consiste à doter la plaque 13 d'une résistance sérigraphiée sur sa face externe 15. La conduction thermique s'opère au travers de la plaque 13 de sorte à chauffer le volume intérieur du conduit 1.

Le volume du conduit 1 est quant à lui créé en creux dans le flasque correspondant.

Les composants visibles en figure 15 sont implantés symétriquement suivant le plan médian de la partie centrale 23 mais cette situation n'est pas limitative.

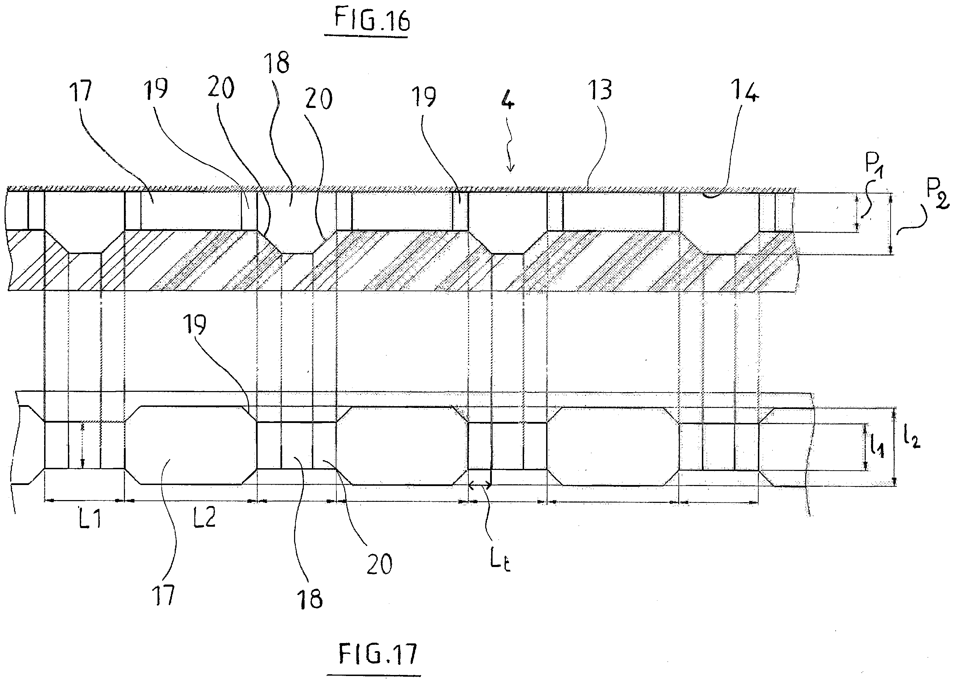

Les figures 16 et 17 illustrent plus en détail la forme en creux du conduit 1. Alors que la face interne 14 de la plaque 13 est avantageusement constituée par un plan lisse, les autres parois du conduit 1 présentent des variations de forme aptes à créer les moyens de mise en turbulence.

Pour la suite de l'exposé, on entend par profondeur, la dimension du conduit 1 orientée perpendiculairement à la face interne 14. La longueur ou direction longitudinale est quant à elle la dimension orientée suivant la direction d'écoulement du fluide à chauffer. Enfin, la largeur correspond à la dimension restante. On comprend aisément que la largeur et la profondeur déterminent la section du conduit 1 à un endroit donné de sa longueur.

Les changements de section présentés plus haut en référence et d'autres modes de réalisation, peuvent, d'une façon générale, intervenir par variation de la largeur et/ou de la profondeur du conduit 1.

Le mode de réalisation des figures 15 à 18 montre un exemple où les variations en largeur et en profondeur sont associées. Outre le fait que l'on joue sur ces deux dimensions pour optimiser la modification du régime d'écoulement du fluide, on peut profiter de cette double variation pour limiter les variations de taille de section ou pour maintenir constante cette taille, le long du conduit 1.

Aux figures 16 et 17, des zones larges 17 et des zones profondes 18 sont alternées suivant la longueur du conduit 1. Préférentiellement, les zones larges 17 sont en outre moins profondes que les zones profondes 18 et inversement en ce qui concerne la largeur. Ainsi, on peut réaliser des tailles de sections proches ou identiques malgré les variations de forme.

Suivant une possibilité, la transition entre les zones 17 et 18 est brutale.

Dans le cas illustré en figures 15 à 18, cependant, la transition est plus douce par le recours à des zones de transition 19, 20. Plus précisément, partant d'une zone large 17, le fluide rencontre d'abord une zone de transition en largeur 19 avantageusement sous forme d'un plan incliné rentrant dans le conduit. Puis se situe une zone de transition en profondeur 20, également avantageusement sous forme de plan incliné, débouchant sur une zone profonde 18. On a constaté que cet enchaînement de variations contrarie bien le flux de sorte à former des turbulences sans pour autant être pénalisant en termes de débits ou de pertes de charge.

Une zone de transition unique, combinant variation en largeur et en profondeur, est néanmoins aussi dans le cadre de l'invention.

On donne ci-après un exemple préféré de dimension d'un conduit 1, en référence aux figures 16 et 17.
P1 : 1,5 mm + 20%
P2 : 2,4 mm ± 20%
ℓ1 : 1,8 mm + 20%
ℓ2: 3 mm ± 20%
L1: 3 mm ± 20%
L2: 5 mm + 20%
Lₜ : 0,9 mm + 20%

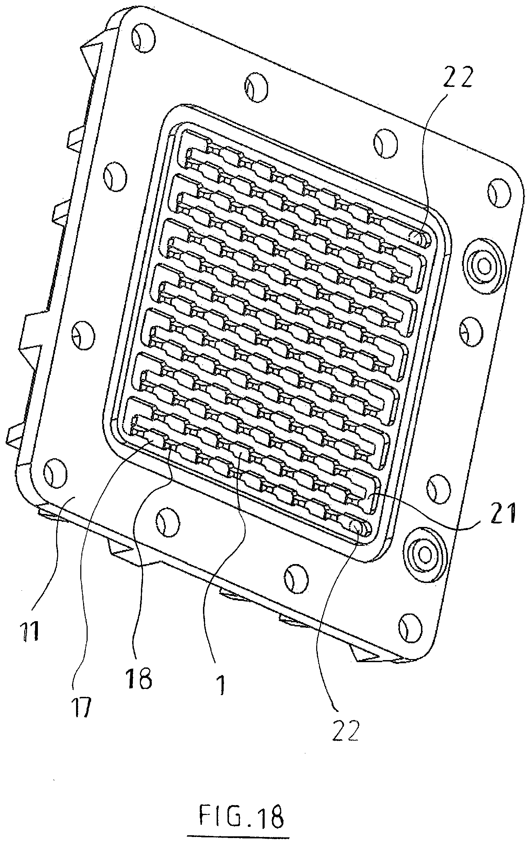

Ce type de conduit 1 peut être implanté dans le dispositif de la figure 15 suivant un circuit en serpentin dont la forme en creux réalisée dans un flasque 11 est visible en figure 18. Le flasque 11 y comporte un pourtour d'assemblage délimitant une zone intérieure où est formé le conduit 1. Un joint 16 assure l'étanchéité (voir figure 15).

Pour limiter les pertes de charges, les zones de conduit 1 équipées des moyens de turbulence peuvent être limitées à certaines sections suivant la longueur du conduit. On peut par ailleurs espacer régulièrement les moyens de mise en turbulence à l'intérieur du conduit.

### REFERENCES

1. Conduit
2. Volume intérieur
3. Flux
4. Partie d'échange thermique
5. Surface en saillie
6. Surface en creux
7. Section large
8. Section étroite
9. Pan incliné
10. Corps
11. Flasque
12. Moyens d'assemblage
13. Plaque
14. Face interne
15. Face externe
16. Joint
17. Zone large
18. Zone profonde
19. Transition en largeur
20. Transition en profondeur
21. Virage
22. Extrémité
23. Partie centrale

## Revendications

1. Machine de préparation de boissons par infusion, comprenant un dispositif de chauffage de fluide comportant au moins un conduit (1) de circulation d'un fluide, **caractérisée par le fait que** le conduit (1) comporte des moyens de mise en turbulence du fluide circulant dans son volume intérieur (2), moyens de mise en turbulence qui comprennent des surfaces en relief sur la paroi interne du conduit (1), machine dans laquelle la paroi interne comporte une partie d'échange thermique (4) apte à coopérer avec des moyens de chauffage et dans laquelle les surfaces en relief sont formées hors de la partie d'échange thermique (4), et dans laquelle au moins une partie des surfaces en relief est configurée pour dévier le fluide en direction de la partie d'échange thermique (4).

2. Machine selon la revendication 1 dans laquelle les surfaces en relief comportent des surfaces en saillie (5) vers le volume intérieur (2) du conduit (1).

3. Machine selon la revendication précédente dans laquelle les surfaces en saillie (5) comprennent des plots.

4. Machine selon la revendication précédente dans laquelle la forme des plots est choisie parmi les formes cylindriques, tronconiques, pyramidales.

5. Machine selon l'une des revendications précédentes dans laquelle les surfaces en relief comportent des surfaces en creux (6) dans la paroi interne du conduit (1).

6. Machine selon l'une des revendications précédentes dans laquelle les surfaces en relief comportent des variations de section du conduit (1).

7. Machine selon la revendication précédente dans laquelle le changement de section comprend une variation en largeur et/ou en profondeur.

8. Machine selon l'une des deux revendications précédentes dans laquelle le changement de section comprend une succession de sections de formes différentes.

9. Machine selon l'une des trois revendications précédentes dans laquelle le conduit (1) comporte au moins deux zones (17, 18), l'une des zones (17) étant plus large et moins profonde que l'autre zone (18).

10. Machine selon la revendication précédente dans laquelle les zones (17, 18) ont une section rectangulaire.

11. Machine selon l'une des deux revendications précédentes dans laquelle les deux zones (17, 18) sont reliées par une portion de transition en largeur et en profondeur.

12. Machine selon la revendication précédente dans laquelle la portion de transition en largeur comporte une zone de transition en largeur (19) et une zone de transition en profondeur (20).

13. Machine selon une quelconque des revendications précédentes dans laquelle les surfaces en relief sont régulièrement espacées le long du conduit (1).

14. Machine selon l'une des revendications précédentes dans laquelle les surfaces en relief comportent des pans inclinés (9).

15. Machine selon la revendication 14 dans laquelle les pans inclinés (9) ont une inclinaison entre 20 et 60°.

16. Machine selon l'une des revendications précédentes dans laquelle la partie d'échange thermique (4) est sous la forme d'une plaque (13) dotée d'une résistance sérigraphiée sur sa face externe (15).

17. Machine selon la revendication précédente dans laquelle le conduit (1) est formé par assemblage de pièces comprenant une pièce de base avec un tracé de conduit en creux et une pièce de couverture formée par la plaque (13).

18. Machine selon l'une des revendications précédentes dans laquelle le conduit (1) a une forme globale en serpentin avec des virages (21).

19. Machine selon l'une des revendications précédentes dans laquelle la section du conduit (1) est inférieure à 10 mm².

20. Machine selon la revendication précédente dans laquelle la section du conduit (1) est comprise entre 3 et 6 mm².

## Patentansprüche

1. Maschine zum Zubereiten von Getränken durch Brühen, eine Medienheizvorrichtung umfassend, die mindestens ein Rohr (1) zur Zirkulation eines Mediums beinhaltet, **dadurch gekennzeichnet, dass** das Rohr (1) Mittel zum Wirbeln des Mediums beinhaltet, das in seinem Innenvolumen (2) zirkuliert, wobei die Mittel zum Wirbeln hervorgehobene Oberflächen an der Innenwand des Rohres (1) umfassen, eine Maschine, in der die Innenwand einen Wärmetauschabschnitt (4) beinhaltet, der imstande ist, mit den Heizmitteln zusammenzuwirken, und in der die hervorgehobenen Oberflächen außerhalb des Wärmetauschabschnitts (4) gebildet sind, und in der mindestens ein Abschnitt der hervorgehobenen Oberflächen konfiguriert ist, um das Medium in Richtung des Wärmetauschabschnitts (4) umzuleiten.

2. Maschine nach Anspruch 1, wobei die hervorgehobenen Oberflächen in das Innenvolumen (2) des Rohres (1) überstehende Oberflächen (5) beinhalten.

3. Maschine nach dem vorstehenden Anspruch, wobei die überstehenden Oberflächen (5) Stifte umfassen.

4. Maschine nach dem vorstehenden Anspruch, wobei die Form der Stifte ausgewählt ist aus den zylindrischen, kegelstumpfförmigen, pyramidenförmigen Formen.

5. Maschine nach einem der vorstehenden Ansprüche, wobei die hervorgehobenen Oberflächen ausgehöhlte Oberflächen (6) in der Innenwand des Rohres (1) beinhalten.

6. Maschine nach einem der vorstehenden Ansprüche, wobei die hervorgehobenen Oberflächen Querschnittvariationen des Rohres (1) aufweisen.

7. Maschine nach dem vorstehenden Anspruch, wobei die Querschnittsänderung eine Variation in der Breite und/ oder in der Tiefe umfasst.

8. Maschine nach einem der beiden vorstehenden Ansprüche, wobei die Querschnittsänderung eine Aufeinanderfolge von Querschnitten in unterschiedlichen Formen umfasst.

9. Maschine nach einem der drei vorstehenden Ansprüche, wobei das Rohr (1) mindestens zwei Zonen (17, 18) beinhaltet, wobei eine der Zonen (17) breiter und weniger tief als die andere Zone (18) ist.

10. Maschine nach dem vorstehenden Anspruch, wobei die Zonen (17, 18) einen rechteckigen Querschnitt aufweisen.

11. Maschine nach einem der beiden vorstehenden Ansprüche, wobei die beiden Zonen (17, 18) durch einen Breiten- und Tiefenübergangsabschnitt verbunden sind.

12. Maschine nach dem vorstehenden Anspruch, wobei der Breitenübergangsabschnitt eine Breitenübergangszone (19) und eine Tiefenübergangszone (20) beinhaltet.

13. Maschine nach einem der vorstehenden Ansprüche, wobei die hervorgehobenen Oberflächen entlang des Rohres (1) gleichmäßig beabstandet sind.

14. Maschine nach einem der vorstehenden Ansprüche, wobei die hervorgehobenen Oberflächen geneigte Seiten (9) beinhalten.

15. Maschine nach Anspruch 14, wobei die geneigten Seiten (9) eine Neigung zwischen 20 und 60° aufweisen.

16. Maschine nach einem der vorstehenden Ansprüche, wobei der Wärmetauschabschnitt (4) unter der Form einer Platte (13) ist, die mit einem Widerstand versehen ist, der auf ihre Außenfläche (15) siebgedruckt ist.

17. Maschine nach dem vorstehenden Anspruch, wobei das Rohr (1) durch Zusammensetzen von Teilen gebildet wird, die ein Basisteil mit einem hohlen Rohrverlauf und einem Abdeckteil umfassen, welches durch die Platte (13) gebildet wird.

18. Maschine nach einem der vorstehenden Ansprüche, wobei das Rohr (1) eine allgemeine Serpentinenform mit Kurven (21) aufweist.

19. Maschine nach einem der vorstehenden Ansprüche, wobei der Querschnitt des Rohres kleiner als 10 mm² ist.

20. Maschine nach dem vorstehenden Anspruch, wobei der Querschnitt des Rohres (1) zwischen 3 und 6 mm² enthalten ist.

## Claims

1. Machine for preparing drinks by infusion, comprising a device for heating fluid comprising at least one duct (1) for circulating a fluid, **characterised by** the fact that the duct (1) comprises means for creating turbulence of the fluid circulating in the inner volume (2) thereof, means for creating turbulence which comprise embossed surfaces on the inner wall of the duct (1), machine wherein the inner wall comprises a heat exchange part (4) capable of cooperating with the heating means and wherein the embossed surfaces are formed outside of the heat exchange part (4), and wherein at least one part of the embossed surfaces is configured to divert to fluid in the direction of the heat exchange part (4).

2. Machine according to claim 1, wherein the embossed surfaces comprise surfaces protruding (5) towards the inner volume (2) of the duct (1).

3. Machine according to the preceding claim, wherein the protruding surfaces (5) comprise studs.

4. Machine according to the preceding claim, wherein the shape of the studs is selected from among cylindrical, truncated and pyramidal shapes.

5. Machine according to one of the preceding claims, wherein the embossed surfaces comprise hollow surfaces (6) in the inner wall of the duct (1).

6. Machine according to one of the preceding claims, wherein the embossed surfaces comprise variations in cross-section of the duct (1).

7. Machine according to the preceding claim, wherein the change in cross-section comprises a variation in width and/or in depth.

8. Machine according to one of the two preceding claims, wherein the change in cross-section comprises a succession of cross-sections of different shapes.

9. Machine according to one of the three preceding claims, wherein the duct (1) comprises at least two zones (17, 18), one of the zones (17) being wider and less deep than the other zone (18).

10. Machine according to the preceding claim, wherein the zones (17, 18) have a rectangular cross-section.

11. Machine according to one of the two preceding claims, wherein the two zones (17, 18) are connected by a width and depth transition portion.

12. Machine according to the preceding claim, wherein the width transition portion comprises a width transition zone (19) and a depth transition zone (20).

13. Machine according to any one of the preceding claims, wherein the embossed surfaces are regularly spaced along the duct (1).

14. Machine according to one of the preceding claims, wherein the embossed surfaces comprise tilted sides (9).

15. Machine according to claim 14, wherein the tilted flaps (9) have a tilt of between 20 and 60°.

16. Machine according to one of the preceding claims, wherein the heat exchange part (4) is in the form of a plate (13) equipped with a screen-printed resistance on the outer face (15) thereof.

17. Machine according to the preceding claim, wherein the duct (1) is formed by assembling parts comprising a base part with a recessed duct path and a covering part formed by the plate (13).

18. Machine according to one of the preceding claims, wherein the duct (1) has an overall coil shape with bends (21).

19. Machine according to one of the preceding claims, wherein the cross-section of the duct (1) is less than 10mm².

20. Machine according to the preceding claim, wherein the cross-section of the duct (1) is between 3 and 6mm².
